# EUROPEAN PATENT APPLICATION

(11) **EP 4 786 298 A1**
(43) Date of publication of application: **05.08.2026**
(21) Application number: 24872280.3
(22) Date of filing: 25.09.2024
(51) Int. Cl.: B60W 50/10, B60K 35/80, B60R 16/02, B60W 30/182, B60W 50/14, G06F 3/0488

(54) **VEHICLE**

(30) Priority: 29.09.2023 JP 2023169167
(71) Applicant: HONDA MOTOR CO., LTD., Tokyo 105-8404 (JP)
(72) Inventor: NISHI Atsushi, Tokyo 107-8556 (JP)
(74) Representative: Weickmann & Weickmann PartmbB
(86) International application number: PCT/JP2024/034187
(87) International publication number: WO 2025/070494

(57) **Abstract**

To provide a vehicle that improves operability on an operation unit and enhances convenience of an occupant. A vehicle includes: an acquisition unit (251) that acquires state information indicating a state of a vehicle (1); an operation unit (180) that receives an operation; and a setting change unit (253) that changes a setting of an operation target based on an operation received by the operation unit (180), wherein, based on the state information acquired by the acquisition unit (251), the setting change unit (253) changes a relationship between an operation amount of an operation received by the operation unit (180) and a degree of change in changing a setting of the operation target.

## Description

### Technical Field

The present invention relates to a vehicle.

### Background Art

Conventionally, there is known a device that includes an operation unit and executes processing corresponding to an operation received by the operation unit.

For example, Patent Literature 1 discloses an input operation device that includes an operation unit capable of performing a tilting operation and a pressing operation, detection means that detects a tilt direction and pressing of the operation unit, and control means that controls input change or input confirmation according to an input operation made by the operation unit. In this input operation device, the control means processes an operation of the operation unit in a tilt direction equivalently with the pressing operation in a predetermined mode.

### Citation List

### Patent Literature

Patent Literature 1: Japanese Patent Laid-Open No. 2012-133713

### Summary of Invention

### Technical Problem

However, in the case of a vehicle, the operability of the operation unit changes depending on the driving state of the vehicle and the driver's gear. In particular, there is a further need for technology to improve the operability of the operation unit while driving or when the occupant is wearing gloves, or the like.

The present invention aims to provide a vehicle that improves operability of an operation unit to improve convenience for an occupant.

### Solution to Problem

This description includes the entire contents of Japanese Patent Application No. 2023-169167, filed on September 29, 2023.

A vehicle includes: an acquisition unit that acquires state information indicating a state of a vehicle; an operation unit that receives an operation; and a setting change unit that changes a setting of an operation target based on an operation received by the operation unit, wherein, based on the state information acquired by the acquisition unit, the setting change unit changes a relationship between an operation amount of an operation received by the operation unit and a degree of change in changing a setting of the operation target.

### Advantageous Effect of Invention

The vehicle changes the relationship between the operation amount of an operation received by the operation unit and the degree of change in changing the setting of the operation target, based on the state information acquired by the acquisition unit, thereby making it possible to improve the operability of the operation unit and enhance convenience for the occupant.

### Brief Description of Drawings

[FIG. 1] FIG. 1 is a right side view of a motorcycle.
[FIG. 2] FIG. 2 is a perspective view of a front of the motorcycle as seen from a rear right side.
[FIG. 3] FIG. 3 is a block diagram showing an ECU and its peripheral configuration.
[FIGS. 4] FIG. 4 shows an operation performed by an occupant on a touch panel and a change in a display state of a monitor.
[FIGS. 5] FIG. 5 shows an operation performed by an occupant on the touch panel and a change in the display state of the monitor.
[FIG. 6] FIG. 6 is a flowchart showing operation of the ECU in Embodiment 1.
[FIG. 7] FIG. 7 is a flowchart showing the operation of the ECU in Embodiment 1.
[FIG. 8] FIG. 8 is a diagram showing an example of a display of a monitor.
[FIG. 9] FIG. 9 is a flowchart showing operation of the ECU in Embodiment 2.
[FIG. 10] FIG. 10 is a flowchart showing operation of the ECU in Embodiment 3.
[FIG. 11] FIG. 11 is a flowchart showing the operation of the ECU in Embodiment 3.
[FIG. 12] FIG. 12 is a flowchart showing operation of the ECU in Embodiment 4.
[FIG. 13] FIG. 13 is a diagram showing another configuration of an operation unit.

### Description of Embodiments

### [1. Vehicle Configuration]

Embodiments of the present invention will now be described with reference to the drawings. Unless otherwise mentioned, directions including front-rear, left-right, and up-down mentioned in the description are the same as those directions relative to a vehicle body. In addition, the symbol FR in each figure indicates the front of the vehicle body, the symbol UP indicates the upper side of the vehicle body, and the symbol LH indicates the left side of the vehicle body.

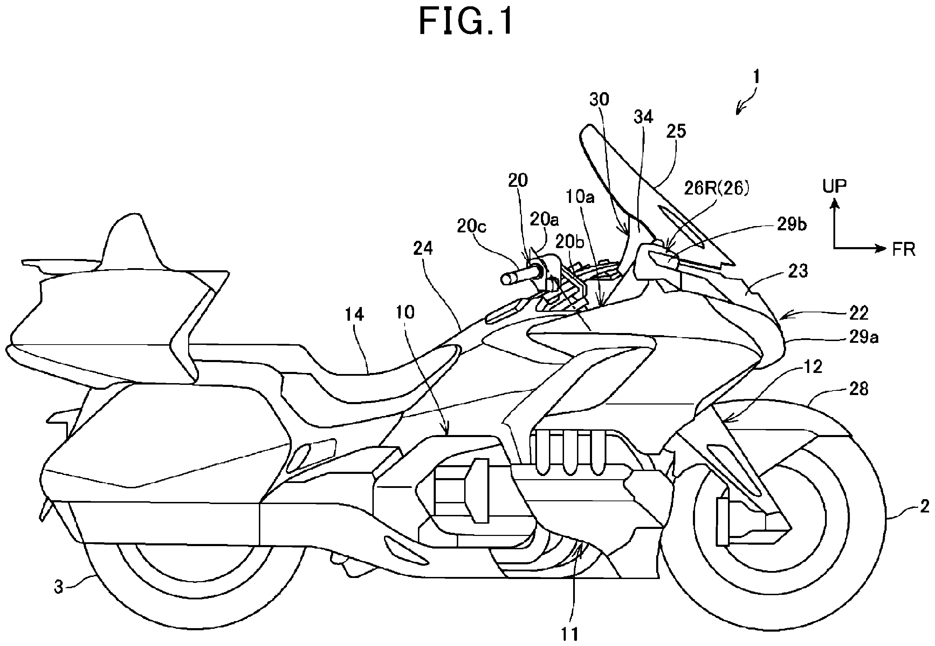

FIG. 1 is a right side view of a motorcycle 1 according to an embodiment of the present invention.

The motorcycle 1 is a vehicle in which an engine 11 serving as a power unit is supported on a vehicle body frame 10, a steering system 12 supporting a front wheel 2 in a steerable manner is supported at the front end of the vehicle body frame 10 so as to be steerable left and right, and a swing arm (not shown) supporting a rear wheel 3 is provided at the rear of the vehicle body frame 10. The rear wheel 3 is a drive wheel driven by the engine 11.

The motorcycle 1 is a saddle-ride vehicle in which the driver (occupant) sits astride on the seat 14, and the seat 14 is provided on the upper side of the rear of the vehicle body frame 10. Here, the above power unit may be an electric motor.

The seat 14 is supported from below by the vehicle body frame 10 and is placed between the front wheel 2 and the rear wheel 3 in the vehicle front-rear direction. The seat 14 is placed rear upper side of the engine 11.

The front wheel 2 is supported at the lower end of the steering system 12. A steering handle 20 is provided at the upper end of the steering system 12. The handle 20 is placed in front of and above the seat 14. The handle 20 is supported on the vehicle body front section 10a, which is located forward of the seat 14 on the vehicle body, and is steered left and right relative to the vehicle body front section 10a.

The handle 20 turns around a steering shaft 20a placed at the vehicle body front section 10a. Like the front wheel 2, the steering shaft 20a is located in the center of the vehicle width of the motorcycle 1. The steering shaft 20a is part of the steering system 12 and is tilted rearward relative to the vertical direction in a side view of the vehicle.

The handle 20 includes rod-shaped handle sections 20b extending outward on the left and right sides of the steering shaft 20a located in the center of the vehicle width, and a pair of left and right grip sections 20c provided on the outer ends of the handle sections 20b in the vehicle width direction. The driver sitting in the seat 14 grips the left and right grip sections 20c with the left and right hands, and steer the handle 20.

The motorcycle 1 includes a vehicle body cover 22 that covers the vehicle body such as the vehicle body frame 10. The front portion of the vehicle body cover 22 includes a front cover 23 that covers the upper part of the steering system 12 and the front end of the vehicle body frame 10 from the front and sides, and a center cover 24 that covers the vehicle body between the handle 20 and the seat 14 from above and sides. The vehicle body front section 10a includes the vehicle body frame 10, the vehicle body cover 22, and the like.

The motorcycle 1 is provided with a windscreen 25 that extends upward relative to the front cover 23, in front of the handle 20.

The motorcycle 1 is provided with a pair of left and right rearview mirrors 26 that extend outward in the vehicle width direction from the left and right sides of the front cover 23. The left and right rearview mirrors 26 are placed outward in the vehicle width direction relative to the windscreen 25. The rearview mirrors 26 are located near the lower end of the windscreen 25.

The motorcycle 1 also includes a front fender 28 that covers the front wheel 2 from above. The front fender 28 is supported by the lower part of the steering system 12.

The motorcycle 1 is equipped with lighting devices: a headlight 29a and a pair of left and right turn signals 29b. The headlight 29a is provided at the front end of the front cover 23, and the turn signals 29b are provided on the front surface of the left and right rearview mirrors 26.

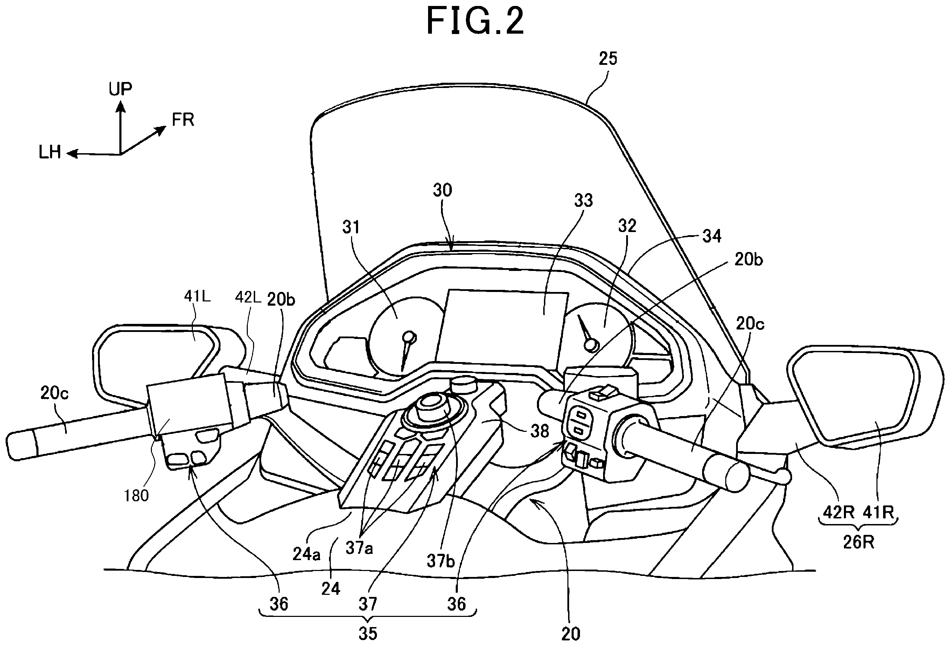

FIG. 2 is a perspective view of the front of the motorcycle 1 as seen from the rear right side.

In the description from FIG. 2 onwards, the pair of left and right components may be distinguished by adding an "L" to the reference numeral on the left and an "R" to the reference numeral on the right, and may be indicated by the reference numeral alone without the "L" or "R".

The motorcycle 1 is equipped with a display device 30 behind the windscreen 25, the display device 30 displaying information related to the state of the motorcycle 1. The display device 30 is placed forward of and above the handle 20. The display device 30 is a meter unit that displays the state of motorcycle 1, such as the vehicle speed of the motorcycle 1.

The display device 30 is equipped with instruments 31 and 32 that display information related to the state of motorcycle 1 (vehicle speed, engine RPM), and a monitor 33 that displays various information. The monitor 33 includes a known display panel such as an LCD panel, and displays various information, including information related to motorcycle 1, toward the driver on the rear upper side.

In this embodiment, the display device 30 has an elongated shape that is long in the vehicle width direction. As viewed from the driver, the display device 30 is larger in size in the left-right direction than in the up-down direction (front-rear direction). The monitor 33 is provided in the center of display device 30 in the vehicle width direction, and instruments 31 and 32 are provided on the left and right sides of monitor 33, respectively. The display device 30 is surrounded by a meter visor 34.

The motorcycle 1 is equipped with operation units 35 with which the driver operates various parts of the motorcycle 1. The operation units 35 include a pair of handle-side operation units 36 respectively provided on the left and right handle sections 20b, and a central operation unit 37 placed in the center of the vehicle width behind the display device 30. The operation units 35 are placed forward of the seat 14.

Operation of the operation units 35 performs operation of, for example, lighting devices such as the headlight 29a and turn signals 29b, an audio system mounted on the motorcycle 1, a navigation system mounted on the motorcycle 1, the driving mode of the engine 11, changing the characteristics of the electronically controlled suspension of the front wheel 2 and rear wheel 3, and various operation menus displayed on the monitor 33.

The motorcycle 1 is equipped with a plate-shaped operation unit support section 38 that extends forward from the front end 24a of the center cover 24 in the center in the vehicle width direction. The operation unit support section 38 extends forward from the center cover 24, passing above the handle 20, and is connected to the rear end of the display device 30. The operation unit support section 38 is located above the center of the handle 20 in the vehicle width direction, and covers the steering shaft 20a from above. The operation unit support section 38 forms part of the vehicle body cover 22.

The central operation unit 37 is provided on the operation unit support section 38, and is located between the center cover 24 and the display device 30.

The central operation unit 37 includes a pressing operation unit 37a including a plurality of operation buttons, and a stick-shaped operation instrument 37b that protrudes upward from the operation unit support section 38.

The operation instrument 37b is placed in front of the pressing operation unit 37a and protrudes upward further than the pressing operation unit 37a. The operation instrument 37b is located in the center in the vehicle width direction. Various parts of the motorcycle 1 can be operated by a tilting operation that is tilting the operation instrument 37b in optional direction, or by a rotation operation that is rotating the operation instrument 37b around the axis of the operation instrument 37b.

Rearview mirrors (mirror bodies) 26L, 26R are located on the left and right sides of the display device 30. The respective rearview mirrors 26L, 26R include mirror bodies (mirrors) 41L, 41R that respectively reflect the left and right rear views, and support stays (connection portions) 42L, 42R that connect the mirror bodies 41L, 41R to the motorcycle 1. The support stays 42L, 42R are provided on the left and right outer sides of the meter visor 34. In other words, the rearview mirrors 26L, 26R are provided adjacent to the display device 30. The rearview mirrors 26L, 26R extend on a longitudinal extension of display device 30 when viewed from the driver, specifically, when viewed in the normal direction to the display screen of monitor 33.

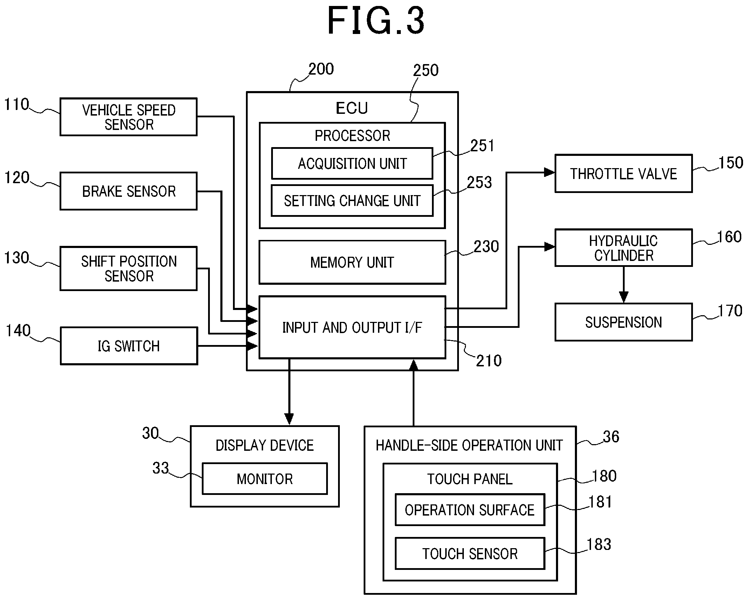

FIG. 3 is a block diagram showing an ECU 200 together with its peripheral configuration.

As shown in FIG. 3, vehicle 1 is equipped with a control system including a vehicle speed sensor 110, a brake sensor 120, a shift position sensor 130, an ignition switch 140, a throttle valve 150, a hydraulic cylinder 160, a touch panel 180, a display device 30, and an ECU (Electronic Control Unit) 200. Hereinafter, the ignition switch 140 will be referred to as an IG switch 140.

The vehicle speed sensor 110 detects the wheel speed of vehicle 1. The vehicle speed sensor 110 outputs sensor data indicating the detected wheel speed to the ECU 200.

The brake sensor 120 detects the operation amount of the brake. The brake sensor 120 outputs sensor data indicating the detected operation amount of the brake to the ECU 200.

The IG switch 140 is a switch that drives the engine 11 mounted on the vehicle 1. When the IG switch 140 is turned on, a signal notifying the ECU 200 that the IG switch 140 is turned on is output to the ECU 200. When the IG switch 140 is turned off, a signal notifying the ECU 200 that the IG switch 140 is turned off is output to the ECU 200. When the IG switch 140 is turned on, the ECU 200 issues a drive command to a starter motor (not shown).

The shift position sensor 130 is a sensor that detects the shift position of a transmission (not shown). The shift position sensor 130 outputs sensor data indicating the detected shift position to the ECU 200.

The throttle valve 150 adjusts the amount of air intake to the engine 11 under the control of the ECU 200.

The hydraulic cylinder 160 adjusts the hydraulic pressure to be supplied to the suspension 170 under the control of the ECU 200. By adjusting the hydraulic pressure supplied to the suspension 170 by the hydraulic cylinder 160, the elasticity of the suspension 170 is adjusted.

The touch panel 180 is provided on a handle-side operation unit 36. The touch panel 180 includes an operation surface 181 and a touch sensor 183 placed on top of the operation surface 181.

The touch sensor 183 detects touch operations on the operation surface 181. Touch operations detected by the touch sensor 183 include swipe operations and flick operations. In a case where the vehicle 1 is a saddle-ride vehicle as in this embodiment, simple operation is required during driving because the instruments 31, 32 and the monitor 33 are small and the occupant is likely to look down. For this reason, this embodiment shows an example in which the vehicle 1 is provided with a touch panel 180 as an operation unit.

The ECU 200 is a computer device including an input and output I/F 210, a memory unit 230, and a processor 250.

The input and output I/F 210 receives input from the sensor data indicating the sensing results of the vehicle speed sensor 110, the brake sensor 120, and the shift position sensor 130. The input and output I/F 210 outputs the input sensor data to memory unit 230. The memory unit 230 temporarily stores the sensor data. In addition, the IG switch 140 is connected to the input and output I/F 210, and the state of the IG switch 140 is notified to the input and output I/F 210.

Furthermore, the input and output I/F 210 is connected to the throttle valve 150 and the hydraulic cylinder 160. The ECU 200 controls the opening degree of the throttle valve 150 via the input and output I/F 210. Furthermore, the ECU 200 controls the hydraulic pressure supplied by the hydraulic cylinder 160 via the input and output I/F 210, thereby adjusting the elasticity of the suspension 170.

The memory unit 230 includes at least a non-volatile memory device. The memory unit 230 may include a volatile memory device in addition to the non-volatile memory device. The memory unit 230 includes, for example, a ROM (Read Only Memory), a flash memory, an EEPROM (Electrically Erasable Programmable Read-Only Memory).

The memory unit 230 stores the control program to be executed by processor 250 and determination thresholds to be used to determine the sensor data and operations. The memory unit 230 stores a first determination threshold, a second determination threshold, a third determination threshold, and a fourth determination threshold. The memory unit 230 is also used as the calculation area for the processor 250.

The processor 250 is an arithmetic processing device equipped with a processor such as a CPU (Central Processing Unit) or a MPU (Micro-Processing Unit). The processor 250 may be configured with a single processor or a plurality of processors. The processor 250 may also be configured with a SoC (System on a Chip) integrated with part or all of memory unit 230 or other circuits. The processor 250 may also be configured as a combination of a CPU that executes programs and a DSP (Digital Signal Processor) that executes predetermined arithmetic processing. Furthermore, there may be a configuration such that all of the functions of processor 250 are implemented in hardware, or there may be a configuration such that a programmable device is used.

### [2. Operation of Embodiment 1]

The ECU 200 has functional units including an acquisition unit 251 and a setting change unit 253. These functional units have functions to be implemented when the processor 250 executes a control program stored in memory unit 230. The term "functional unit" refers to a functional configuration, and specific implementation forms are not particularly limited. In other words, it is not necessarily necessary to implement hardware corresponding to each functional unit individually, and it is of course possible to configure so that a single processor 250 executes programs to implement the functions of a plurality of functional units. Furthermore, some of the software-implemented functions in the above embodiments may be implemented by hardware, or some of the hardware-implemented functions may be implemented by software.

The acquisition unit 251 acquires state information from the memory unit 230 and outputs the acquired state information to the setting change unit 253. The state information acquired by the acquisition unit 251 includes sensor data indicating the vehicle speed detected by the vehicle speed sensor 110, sensor data indicating the operation amount of the brake detected by the brake sensor 120, shift position information detected by the shift position sensor 130, and information indicating the state of the IG switch 140.

The setting change unit 253 changes the relationship between the amount of operation received by the touch panel 180 and the degree of change in changing the setting of the operation target, based on the state of the vehicle 1 acquired by the acquisition unit 251. In a case where the vehicle 1 is a saddle-ride vehicle, as in this embodiment, the occupant wears gloves and operates operation units such as the touch panel 180. This can make delicate operations more difficult compared to a case of the bare hands. For this reason, the setting change unit 253 changes the relationship between the amount of operation received by the touch panel 180 and the degree of change in changing the setting of the operation target in accordance with the state of the vehicle 1, such as a driving state or a stop state.

The operation targets for which settings can be changed by operations received by the touch panel 180 include, for example, the elasticity of the suspension 170, the output of the engine or motor drive source, switching of the headlight between the on state and the off state, and switching of the headlight between a high beam state and a low beam state. The operation targets also include changes in the settings for audio equipment installed in the vehicle 1, the output of a speaker, and the like. Furthermore, in a case where the vehicle 1 is equipped with a short-range wireless communication unit such as Bluetooth (registered trademark) and is connected to a mobile terminal such as a smartphone via this short-range wireless communication unit, the operation targets include the settings of the mobile terminal. The settings of the mobile terminal include, for example, selecting the track to be played on the mobile terminal and setting the volume.

First, the setting change unit 253 determines the state of the vehicle 1 based on the state information acquired by the acquisition unit 251. The state of the vehicle 1 to be determined by the setting change unit 253 includes a driving state in which the vehicle 1 is driving and a stop state in which the vehicle 1 is stopped.

The setting change unit 253 determines the state of the vehicle 1 based on: the sensor data from the vehicle speed sensor 110; and at least one of the sensor data from the brake sensor 120 and the shift position detected by the shift position sensor 130.

For example, when the sensor data of the vehicle speed sensor 110 indicates that the speed of the vehicle 1 is 0 km/h and the shift position detected by the shift position sensor 130 is neutral or parking, the setting change unit 253 determines that the vehicle 1 is in the stop state.

In addition, when the sensor data of the vehicle speed sensor 110 indicates that the speed of the vehicle 1 is 0 km/h and the sensor data of the brake sensor 120 indicates that the operation amount of the brake is equal to or greater than a preset setting value, the setting change unit 253 determines that the vehicle 1 is in the stop state.

Furthermore, when the sensor data of the vehicle speed sensor 110 indicates that the speed of the vehicle 1 is 0 km/h, the shift position detected by the shift position sensor 130 is neutral or parking, and the sensor data of the brake sensor 120 indicates that the operation amount of the brake is equal to or greater than a preset setting value, the setting change unit 253 determines that the vehicle 1 is in the stop state.

When the sensor data of the brake sensor 120 indicates that the operation amount of the brake is less than a preset value, and the sensor data of the vehicle speed sensor 110 indicates that the speed of the vehicle 1 is greater than 0 km/h, the setting change unit 253 determines that the vehicle 1 is in the driving state.

In addition, when the shift position detected by the shift position sensor 130 is a position other than neutral or parking, and the sensor data of the vehicle speed sensor 110 indicates that the speed of the vehicle 1 is greater than 0 km/h, the setting change unit 253 determines that the vehicle 1 is in the driving state.

Furthermore, when the sensor data of the brake sensor 120 indicates that the operation amount of the brake is less than a preset value, the shift position detected by the shift position sensor 130 is a position other than neutral or parking, and the sensor data of the vehicle speed sensor 110 indicates that the speed of the vehicle 1 is greater than 0 km/h, the setting change unit 253 determines that the vehicle 1 is in the driving state.

The setting change unit 253 also determines the driving mode of the vehicle 1 as the state of the vehicle 1. The driving modes determined by the setting change unit 253 include a normal driving mode, a congestion following mode, and a constant speed driving mode.

The setting change unit 253 determines the normal driving mode, the congestion following mode, or the constant speed driving mode based on the operation received by the handle-side operation unit 36. The vehicle 1 changes its driving mode to the normal driving mode, the congestion following mode, or the constant speed driving mode through operation of the handle-side operation unit 36.

In addition to the operation received by the handle-side operation unit 36, the setting change unit 253 may also determine the driving mode based on external information detected by devices mounted on the vehicle, such as meter operation, accelerator operation by the occupant, vehicle speed, occupant state, or surrounding congestion.

The normal driving mode is a mode in which the vehicle 1 is driven in accordance with the accelerator operation and brake operation by the occupant.

The congestion following mode is a driving mode in which the vehicle 1 is caused to follow a preceding vehicle that is ahead of the vehicle 1 on a congested road. For example, the preceding vehicle is detected based on sensor data of a camera or a distance measurement sensor mounted on the vehicle 1, and the vehicle 1 is caused to follow the preceding vehicle based on the detected sensor data.

The constant speed driving mode is a mode in which the vehicle 1 is caused to drive at a constant vehicle speed.

When the setting change unit 253 determines the state of the vehicle 1, it then receives the occupant's operation performed on the touch panel 180, and changes the relationship between the operation amount of the received operation and the degree of change in changing the setting of the operation target, based on the determined state of the vehicle 1.

In this embodiment, a determination threshold is prepared for each state of the vehicle 1 and stored in the memory unit 230. The setting change unit 253 reads, from the memory unit 230, the determination threshold corresponding to the determined state of the vehicle 1, and determines the operation amount of the occupant's operation performed on the touch panel 180. More specifically, the setting change unit 253 determines whether the operation amount of the received operation is an operation amount of the effective operation, and if the operation is an effective operation, the setting change unit 253 determines the degree of change in changing the setting of the operation target by comparing the operation amount of the received operation with a determination threshold.

The touch sensor 183 detects the movement amount and movement direction of the touch operation performed by the occupant on the touch panel 180. The setting change unit 253 compares the movement amount of the touch operation detected by the touch panel 180 with the determination threshold to determine whether the operation detected by the touch panel 180 is an effective operation, or to determine the degree of change in changing the setting of the operation target.

The memory unit 230 in Embodiment 1 stores four determination thresholds: a first determination threshold, a second determination threshold, a third determination threshold, and a fourth determination threshold.

The first determination threshold and the second determination threshold are determination thresholds to be used for determination when the vehicle 1 is in the stop state. The first determination threshold is a threshold to determine whether the operation amount of the touch operation detected by the touch panel 180 is an operation amount corresponding to an operation that changes the setting of the operation target by one stage. The second determination threshold is a threshold to determine whether the operation amount of the touch operation detected by the touch panel 180 is an operation amount corresponding to an operation that changes the setting of the operation target by two stages. The second determination threshold is greater in value than the first determination threshold.

The third and fourth determination thresholds are determination thresholds to be used for determination when the driving mode of the vehicle 1 is the normal driving mode.

The third determination threshold is a threshold to determine whether the operation amount of the touch operation detected by the touch panel 180 is an operation amount corresponding to an operation that changes the setting of the operation target by one stage. The fourth determination threshold is a threshold to determine whether the operation amount of the touch operation detected by the touch panel 180 is an operation amount corresponding to an operation that changes the setting of the operation target by two stages. The fourth determination threshold is greater in value than the third determination threshold.

In the first determination threshold and the third determination threshold, the first determination threshold to be used to determine an operation in the stop state is less in value than the third determination threshold to be used to determine an operation in the normal driving mode. This is because, when the vehicle 1 is in the stop state, the occupant can perform more delicate operations than when the vehicle 1 is in the driving state.

For the similar reason, in the second determination threshold and the fourth determination threshold, the second determination threshold to be used to determine an operation in the stop state is less than the fourth determination threshold to be used to determine an operation in the normal driving mode.

The setting change unit 253 acquires a determination threshold corresponding to the determined state of the vehicle 1 from the memory unit 230. When the setting change unit 253 acquires the determination threshold corresponding to the state of the vehicle 1, it compares the acquired determination threshold with the operation amount of the touch operation detected by the touch panel 180.

For example, it is assumed that the vehicle 1 is in the driving state and the setting change unit 253 has acquired the third determination threshold and fourth determination threshold from the memory unit 230.

The setting change unit 253 first compares the operation amount of the touch operation detected by the touch panel 180 with the third determination threshold.

When the operation amount of the touch operation is equal to or less than the third determination threshold, the setting change unit 253 determines that the touch operation detected by the touch panel 180 is an ineffective operation.

In addition, when the operation amount of the touch operation is greater than the third determination threshold, the setting change unit 253 next compares the amount of touch operation with the fourth determination threshold.

When the operation amount of the touch operation is greater than the third determination threshold and equal to or less than the fourth determination threshold, the setting change unit 253 changes the setting of the operation target by one stage. When the operation amount of the touch operation is greater than the fourth determination threshold, the setting change unit 253 changes the setting of the operation target by two stages.

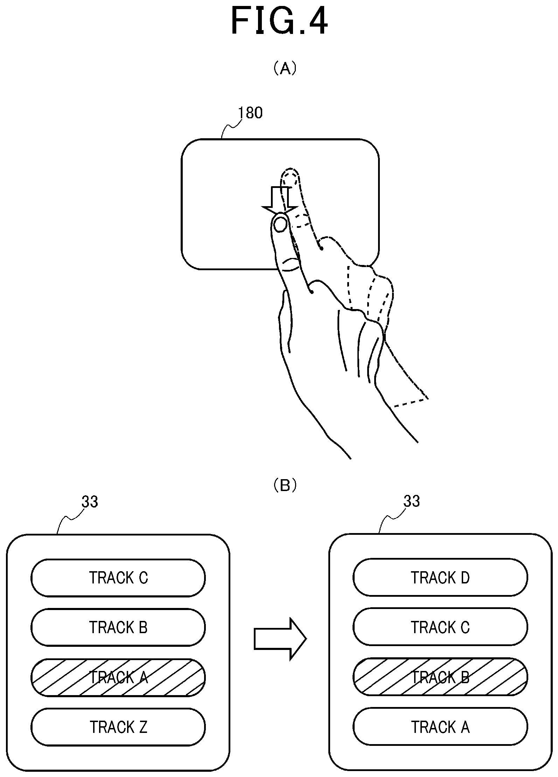

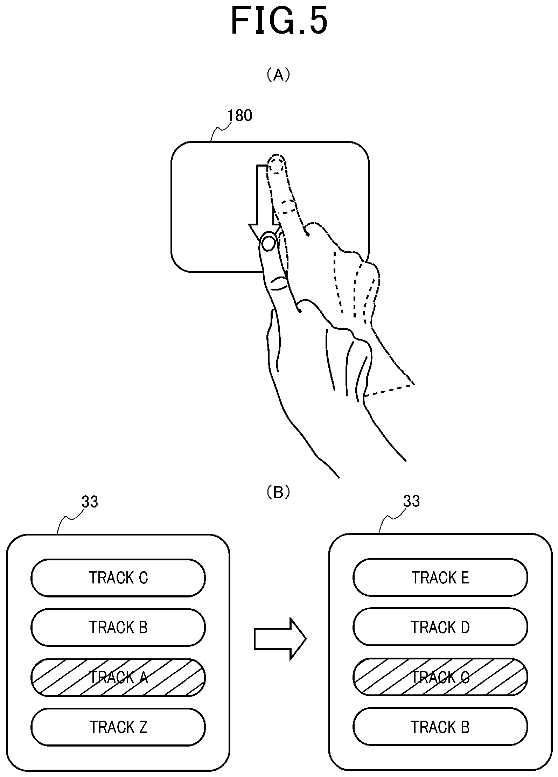

FIGS. 4A and 5A show operations performed by the occupant on the touch panel 180, and FIGS. 4B and 5B show changes in the display state of the monitor 33. In particular, FIG. 4A and 4B show the change in the display state of the monitor 33 when the operation amount of the touch operation performed by the occupant is greater than the third determination threshold and equal to or less than the fourth determination threshold. FIGS. 5A and 5B shows the change in the display state of the monitor 33 when the operation amount of the touch operation performed by the occupant is greater than the fourth determination threshold.

It is assumed that the vehicle 1 is equipped with an audio device, and that the track currently being played by the audio device is displayed on the monitor 33. It is also assumed that the track currently being played by the audio device is track A, and that the occupant touches the operation surface 181 of the touch panel 180 with the finger and scrolls the finger in touch downward on the operation surface 181 to change the track to track B, track C, track D, and so on in order.

When the operation amount of the touch operation detected by the touch sensor 183 is small, and is greater than the third determination threshold and equal to or less than the fourth determination threshold, the setting change unit 253 causes the audio device to play the track B, which is the next to the track A currently being played, as shown in FIG. 4.

When the operation amount of the touch operation detected by the touch sensor 183 is large, and is greater than the fourth determination threshold, the setting change unit 253 causes the audio device to play the track C, which is after the next to the track A currently being played, as shown in FIG. 5.

Furthermore, the touch panel 180 detects the movement direction of the touch operation, which is the operation direction, in addition to the movement amount of touch operation.

The setting change unit 253 may determine the state of the vehicle 1, and then acquire the operation direction of the touch operation detected by the touch panel 180 to determine whether the touch operation is an operation to be compared with the determination threshold based on the acquired operation direction and based on the state of vehicle 1.

In a case where the vehicle 1 is in the driving state, fine operation is difficult. For this reason, the setting change unit 253 limits the number of operation directions to be determined in a case where the vehicle 1 is in the driving state to less than the number of operation directions to be determined in a case where the vehicle 1 is in the stop state. This increases the accuracy of determining operations performed with the touch panel 180.

For example, in a case where the vehicle 1 is in the stop state, operations in the following eight directions on the operation surface 181 of the touch panel 180 are each defined as an operation to be determined: upward, 45-degree diagonally upward to the right, rightward, 45-degree diagonally downward to the right, downward, 45-degree diagonally downward to the left, leftward, and 45-degree diagonally upward to the left. Furthermore, in a case where the vehicle 1 is in the driving state, operations in the following four directions on the operation surface 181 of the touch panel 180 are each an operation to be determined: upward, downward, leftward, and rightward.

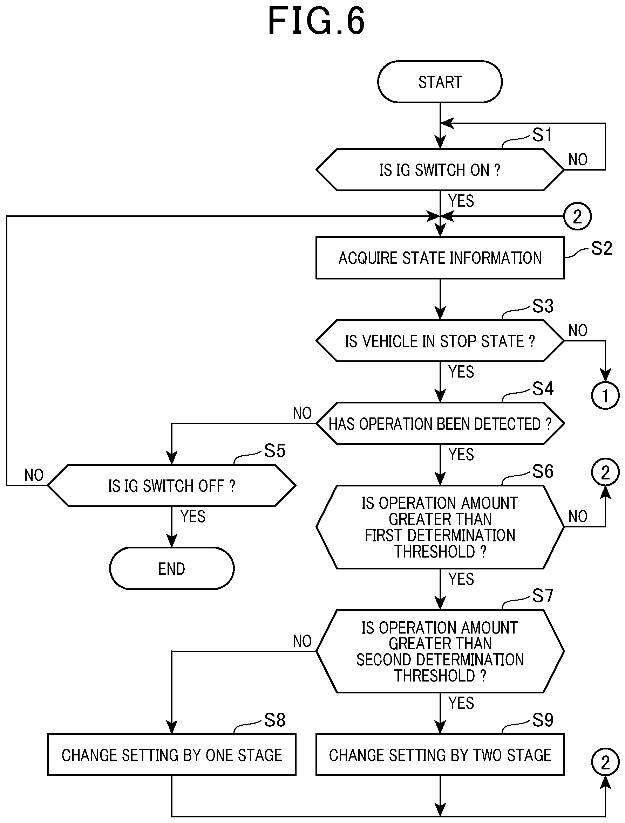

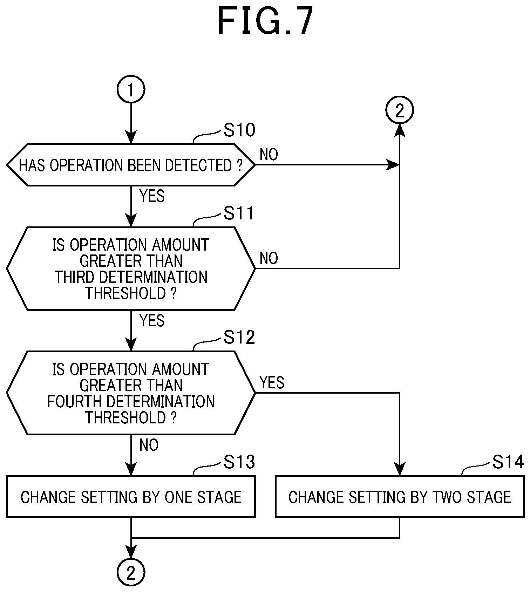

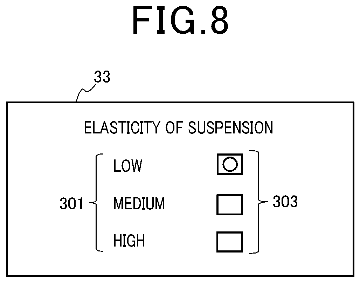

FIGS. 6 and 7 are flowcharts showing the operation of the ECU 200 in Embodiment 1. FIG. 8 is a diagram showing an example of a display on the monitor 33.

The operation of the ECU 200 will be described with reference to a flowchart shown in FIG. 6.

The following describes a case where a display indicating the elasticity of the suspension 170 is displayed on the monitor 33 and this display on the monitor 33 is changed by touch operation on the touch panel 180. As shown in FIG. 8, for example, the monitor 33 displays texts 301 of low, medium, and high that indicate the elasticity of the suspension 170, and check boxes 303 displayed for the respective texts 301. A symbol such as a white circle is displayed in the check box 303 corresponding to the current setting of the suspension 170. The occupant operates the touch panel 180 to change the elasticity of the suspension 170.

First, the ECU 200 determines whether the IG switch 140 is turned on (step S1). If the IG switch 140 is not turned on (step S1/NO), the ECU 200 waits until the IG switch 140 is turned on.

When IG switch 140 is turned on (step S1/YES), the ECU 200 acquires state information indicating the state of vehicle 1 (step S2). The state information acquired by the ECU 200 includes the vehicle speed measured by the vehicle speed sensor 110, the brake operation amount detected by the brake sensor 120, the shift position detected by the shift position sensor 130, the state of the IG switch 140, and the like.

Next, based on the acquired state information, the ECU 200 determines whether vehicle 1 is in the stop state (step S3). If the ECU 200 determines that vehicle 1 is in the stop state (step S3/YES), it determines whether an operation has been detected (step S4). In this processing flow, it is determined whether a touch operation on the operation surface 181 has been detected.

The ECU 200 determines whether operation of the touch panel 180 is detected by the touch sensor 183 (step S4). If no operation is detected (step S4/NO), the ECU 200 determines whether the IG switch 140 has been turned off (step S5). If the IG switch 140 has been turned off (step S5/YES), the ECU 200 ends this processing flow and terminates control.

If the IG switch 140 has not been turned off (step S5/NO), the ECU 200 again acquires state information (step S2) and determines whether vehicle 1 is in the stop state (step S3).

If operation is detected by the touch sensor 183 (step S4/YES), the ECU 200 determines whether the operation amount of the detected operation is greater than the first determination threshold (step S6). The first determination threshold is a determination threshold to be used for determination when vehicle 1 is in the stop state. The ECU 200 determines the movement distance of the occupant's finger on the operation surface 181, detected by the touch sensor 183, as the operation amount, and determines whether this operation amount is greater than the first determination threshold.

If the operation amount is equal to or less than the first determination threshold value (step S6/NO), the ECU 200 determines that the detected operation is ineffective. The ECU 200 again acquires the state information (step S2) and determines whether the vehicle 1 is in the stop state.

If the operation amount is greater than the first determination threshold (step S6/YES), the ECU 200 then compares the operation amount with the second determination threshold. The second determination threshold is also a determination threshold to be used for determination when the vehicle 1 is in the stop state. If the operation amount is equal to or less than the second determination threshold (step S7/NO), the ECU 200 changes the elasticity of suspension 170, which is the operation target, by one stage (step S8). For example, if the current setting of the suspension 170 is low, the setting of the suspension 170 is changed to medium.

If the operation amount is greater than the second determination threshold (step S7/YES), the ECU 200 changes the elasticity of the suspension 170, which is the operation target, by two stages (step S9). For example, if the current setting of the suspension 170 is low, the setting of the suspension 170 is changed to high.

Next, the operation of the ECU 200 when the vehicle 1 is driving will be described with reference to a flowchart shown in FIG. 7.

First, if the ECU 200 determines in step S3 that the vehicle 1 is not stopped, it then performs the determination in step S10. The ECU 200 determines whether an operation on the touch panel 180 has been detected by the touch sensor 183 (step S10).

If operation of the touch panel 180 is not detected by the touch sensor 183 (step S10/NO), the ECU 200 acquires the state information again (step S2) and determines whether the vehicle 1 is in the stop state.

When the touch sensor 183 detects an operation on the touch panel 180 (step S10/YES), the ECU 200 determines whether the operation amount of the detected operation is greater than the third determination threshold (step S11). The third determination threshold is a determination threshold to be used for determination when the vehicle 1 is in the normal driving mode.

If the operation amount of the detected operation is equal to or less than the third determination threshold (step S11/NO), the ECU 200 determines that the detected operation is ineffective. The ECU 200 again acquires the state information (step S2) and determines whether the vehicle 1 is in the stop state.

Furthermore, if the operation amount of the detected operation is greater than the third determination threshold (step S11/YES), the ECU 200 determines whether the operation amount of the detected operation is greater than the fourth determination threshold (step S12). The fourth determination threshold is also a determination threshold to be used for determination when vehicle 1 is in the normal driving mode.

If the operation amount of the detected operation is equal to or less than the fourth determination threshold (step S12/NO), the ECU 200 changes the elasticity of the suspension 170, which is the operation target, by one stage (step S13). For example, if the current setting of the suspension 170 is low, the setting of the suspension 170 is changed to medium.

Furthermore, if the operation amount is greater than the fourth determination threshold (step S12/YES), the ECU 200 changes the elasticity of the suspension 170, which is the operation target, by two stages (step S14). For example, if the current setting of the suspension 170 is low, the setting of the suspension 170 is changed to high.

### [3. Operation of Embodiment 2]

Next, Embodiment 2 will be described. Note that the configuration of the vehicle 1 is the same as that of Embodiment 1 shown in FIGS. 1 to 3, and detailed description will be omitted.

In the vehicle 1 of Embodiment 2, the memory unit 230 stores a fifth determination threshold and a sixth determination threshold in addition to the first determination threshold, the second determination threshold, the third determination threshold, and the fourth determination threshold.

The third determination threshold and the fourth determination threshold are used for determination in a case where the driving mode of the vehicle 1 is the normal driving mode, and the fifth determination threshold and the sixth determination threshold are used for determination in a case where the driving mode of the vehicle 1 is the congestion following mode or the constant speed driving mode.

The fifth determination threshold is a threshold that determines whether the operation amount of the touch operation detected by the touch panel 180 is an operation amount corresponding to an operation that changes the setting of the operation target by one stage. The sixth determination threshold is a threshold that determines whether the operation amount of the touch operation detected by the touch panel 180 is an operation amount corresponding to an operation that changes the setting of the operation target by two stages. The sixth determination threshold is greater in value than the fifth determination threshold.

Of the first determination threshold, the third determination threshold, and the fifth determination threshold, the first determination threshold to be used to determine an operation in the stop state is the smallest in value, and the third determination threshold to be used to determine an operation in the normal driving mode is the greatest in value.

Of the second determination threshold, the fourth determination threshold, and the sixth determination threshold, the second determination threshold value to be used to determine an operation in the stop state is the smallest in value, and the sixth determination threshold to be used to determine an operation in the normal driving mode is the greatest in value.

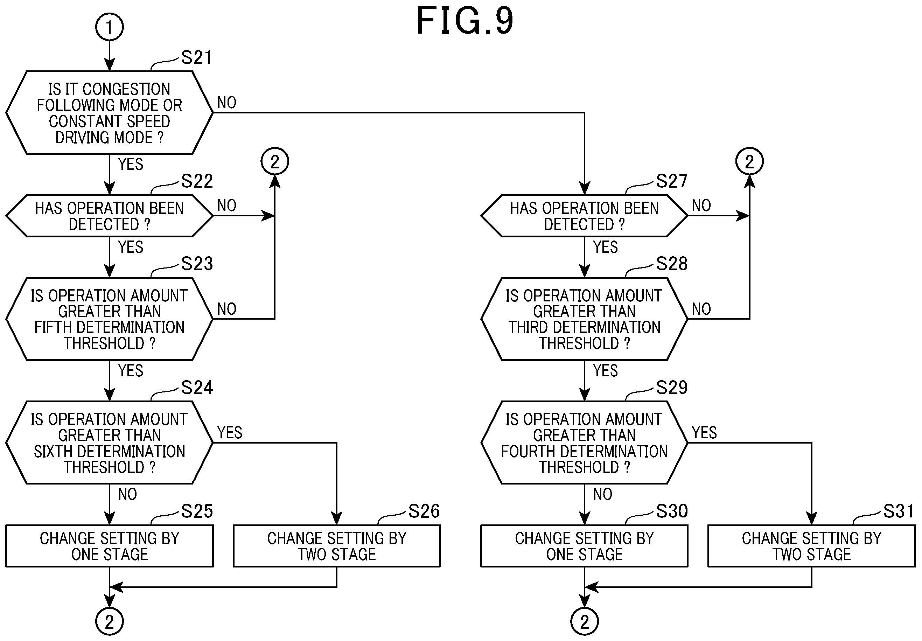

The operation of the ECU 200 in Embodiment 2 will be described with reference to a flowchart shown in FIG. 9.

Note that the flowchart in FIG. 9 shows a continuation of the operation shown in the flowchart in FIG. 6. That is, if the determination in step S3 of the flowchart shown in FIG. 6 is negative, the ECU 200 executes the operation shown in the flowchart in FIG. 9. Since the operation of the ECU 200 according to the flowchart in FIG. 6 has already been described, detailed description will be omitted.

When the ECU 200 determines that vehicle 1 is in the driving state (step S3/NO), it determines whether the driving mode of vehicle 1 is either of the congestion following mode or the constant speed driving mode (step S21). The ECU 200 determines whether the driving mode of vehicle 1 is either of the congestion following mode or the constant speed driving mode based on operation of handle-side operation unit 36.

If the ECU 200 determines that the driving mode of vehicle 1 is either of the congestion following mode or the constant speed driving mode (step S21/YES), it determines whether operation of the touch panel 180 has been detected by the touch sensor 183 (step S22). If operation has not been detected by the touch sensor 183 (step S22/NO), the ECU 200 acquires state information again (step S2) and determines whether vehicle 1 is in the stop state (step S3).

If operation is detected by the touch sensor 183 (step S4/YES), the ECU 200 determines whether the operation amount of the detected operation is greater than the fifth determination threshold (step S6). The fifth determination threshold is a determination threshold to be used for determination when the state of vehicle 1 is in the congestion following mode or the constant speed driving mode.

If the operation amount detected by the touch sensor 183 is equal to or less than the fifth determination threshold (step S23/NO), the ECU 200 determines that the detected operation is ineffective. The ECU 200 again acquires the state information (step S2) and determines whether the vehicle 1 is in the stop state.

If the ECU 200 determines that the operation amount is greater than the fifth determination threshold (step S23/YES), it then compares the operation amount with the sixth determination threshold. The sixth threshold is also a threshold to be used for determination when the state of the vehicle 1 is in the congestion following mode or the constant speed driving mode. If the operation amount is equal to or less than the sixth determination threshold (step S24/NO), the ECU 200 changes the elasticity of the suspension 170, which is the operation target, by one stage (step S25). For example, if the current setting of the suspension 170 is low, the setting of the suspension 170 is changed to medium.

If the operation amount is greater than the second determination threshold (step S24/YES), the ECU 200 changes the elasticity of the suspension 170, which is the operation target, by two stages (step S26). For example, if the current setting of the suspension 170 is low, the setting of the suspension 170 is changed to high.

If the driving mode of the vehicle 1 is not any of the congestion following mode and the constant speed driving mode in step S21, the operation is the same as the operation shown in the flowchart of FIG. 7, and therefore detailed description will be omitted.

### [4. Operation of Embodiment 3]

Next, Embodiment 3 will be described. Note that the configuration of the vehicle 1 is the same as that of Embodiment 1 shown in FIGS. 1 to 3, and detailed description will be omitted.

In the above-described Embodiments 1 and 2, the determination threshold to be used to determine the operation is changed in accordance with the state of the vehicle 1. For example, in a case where the vehicle 1 is in the stop state, the first determination threshold and the second determination threshold are used to determine an operation on the touch panel 180. Similarly, in a case where the vehicle 1 is in the normal driving mode, the third determination threshold and fourth determination threshold are used to determine an operation on the touch panel 180, and in a case where the vehicle 1 is in the congestion following mode or the constant speed driving mode, the fifth determination threshold and the sixth determination threshold are used to determine an operation on the touch panel 180.

In Embodiment 3, a single determination threshold is used to determine an operation on the touch panel 180, regardless of whether the vehicle 1 is in the stop state or driving state. Furthermore, when vehicle 1 is in the stop state, the setting of the operation target is changed by one stage each time an operation with an operation amount greater than the determination threshold is detected. In contrast, when the state of the vehicle 1 is in the driving state, the setting of the operation target is changed if the number of detected operations each with an operation amount greater than the determination threshold is equal to or greater than a set number that is set in advance. In other words, in a case where n is the set number, the setting of the operation target is changed if determination threshold × n ≤ operation amount. If the number of detected operations each with an operation amount greater than the determination threshold is less than the set number, the setting of the operation target is not changed. As a result, when the vehicle 1 is driving, even an operation with a large movement results in a one-stage change. This can further reduce the need to operate while looking at the operation surface.

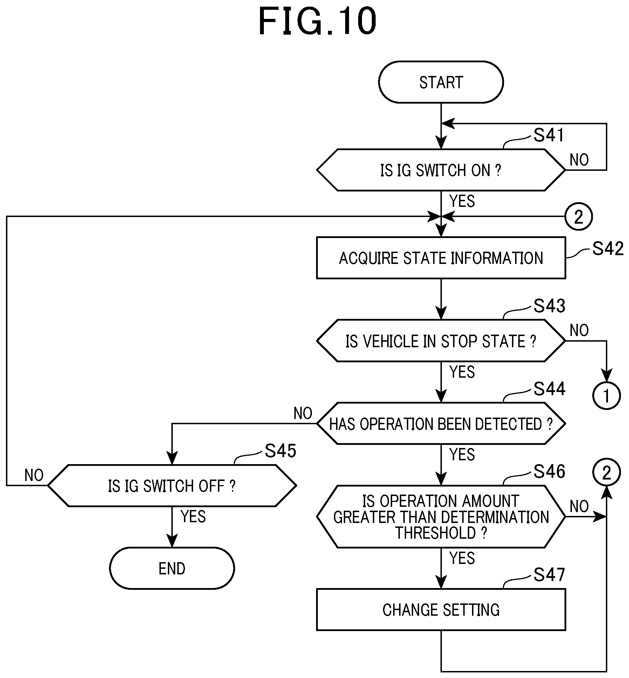

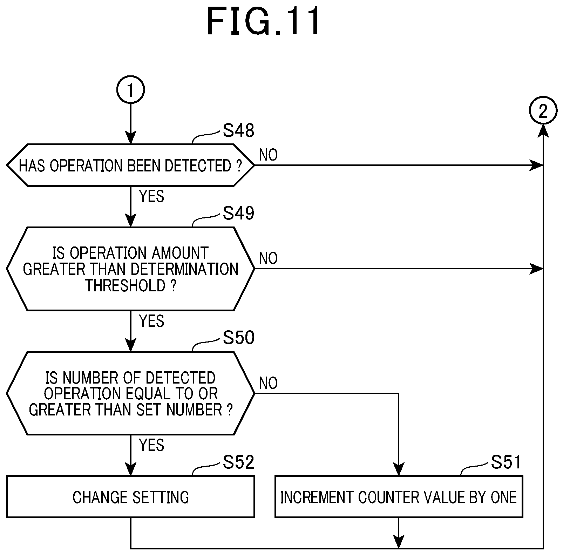

The operation of the ECU 200 in Embodiment 3 will be described with reference to flowcharts shown in FIGS. 10 and 11.

First, the ECU 200 determines whether the IG switch 140 has been turned on (step S41). If IG switch 140 is not turned on (step S41/NO), the ECU 200 waits until the IG switch 140 is turned on.

When the IG switch 140 is turned on (step S41/YES), the ECU 200 acquires state information indicating the state of the vehicle 1 (step S42).

Next, based on the acquired state information, the ECU 200 determines whether vehicle 1 is in the stop state (step S43). If the ECU 200 determines that vehicle 1 is in the stop state (step S43/YES), it determines whether operation of the touch panel 180 has been detected by the touch sensor 183 (step S44).

If operation of the touch panel 180 is not detected by the touch sensor 183 (step S44/NO), the ECU 200 determines whether the IG switch 140 has been turned off (step S45). If the IG switch 140 has been turned off (step S45/YES), the ECU 200 ends this processing flow and terminates control.

If the IG switch 140 has not been turned off (step S45/NO), the ECU 200 again acquires state information (step S42) and determines whether the vehicle 1 is in the stop state (step S43).

If operation of the touch panel 180 is detected by the touch sensor 183 (step S44/YES), the ECU 200 determines whether the operation amount of the detected operation is greater than the determination threshold (step S46). If the operation amount of the detected operation is equal to or less than the determination threshold (step S46/NO), the ECU 200 determines that the detected operation is ineffective. The ECU 200 acquires the state information again (step S42) and determines whether the vehicle 1 is in the stop state.

If the operation amount of the detected operation is greater than the determination threshold (step S46/YES), the ECU 200 changes the elasticity of the suspension 170, which is the operation target, by one stage (step S47). For example, if the current setting of the suspension 170 is low, the setting of the suspension 170 is changed to medium.

If the operation amount of the detected operation is equal to or less than the determination threshold (step S46/NO), the ECU 200 returns to step S42, acquires the state information again (step S42), and determines whether the vehicle 1 is in the stop state (step S43).

Next, with reference to a flowchart shown in FIG. 11, the operation of the ECU 200 will be described in a case where it determines that vehicle 1 is not in the stop state.

If the ECU 200 determines that vehicle 1 is not in the stop state (step S43/NO), it determines whether operation of the touch panel 180 has been detected by the touch sensor 183 (step S48).

If operation of the touch panel 180 is not detected by the touch sensor 183 (step S48/NO), the ECU 200 acquires the state information again (step S42) and determines whether the vehicle 1 is in the stop state (step S43).

If operation of the touch panel 180 is detected by the touch sensor 183 (step S48/NO), the ECU 200 determines whether the operation amount of the detected operation is greater than the determination threshold (step S49).

If the operation amount of the detected operation is equal to or less than the determination threshold (step S49/NO), the ECU 200 acquires the state information again (step S42) and determines whether the vehicle 1 is in the stop state (step S43).

If the operation amount of the detected operation is greater than the determination threshold (step S49/YES), the ECU 200 determines whether the number of detected operations each with an operation amount greater than the determination threshold is equal to or greater than the set number that is set in advance (step S50).

If the number of detected operations each with an operation amount greater than the determination threshold is not equal to or greater than the set number that is set in advance (step S50/NO), the ECU 200 increments the count value of a counter by one, the counter counting the number of detected operations each with an operation amount greater than the determination threshold (step S51).

If the number of detected operations each with an operation amount greater than the determination threshold is equal to or greater than the set number that is set in advance (step S50/YES), the ECU 200 changes the setting of the operation target (step S52). For example, the ECU 200 changes the elasticity of the suspension 170, which is the operation target, by one stage.

### [5. Operation of Embodiment 4]

Next, Embodiment 4 will be described. Note that the configuration of the vehicle 1 is the same as that of Embodiment 1 shown in FIGS. 1 to 3, and detailed description will be omitted.

Similar to the vehicle 1 in Embodiment 3, the vehicle 1 in Embodiment 4 also uses a single determination threshold to determine an operation on the touch panel 180, regardless of whether vehicle 1 is in the stop state or the driving state.

When the vehicle 1 in Embodiment 4 detects an operation with an operation amount greater than the determination threshold in a case where the vehicle 1 is in the driving state, it changes the setting of the operation target after a set time that is set in advance elapses from the detection of this operation. In Embodiment 4, the setting is not changed until the set time elapses, even if the occupant inputs an operation a plurality of times within a unit time, thereby increasing the reliability of the setting.

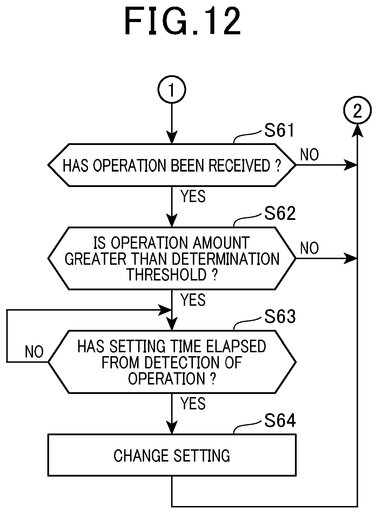

The operation of the ECU 200 in Embodiment 4 will be described with reference to a flowchart shown in FIG. 12.

The flowchart in FIG. 12 shows a continuation of the operation shown in the flowchart in FIG. 10. That is, if the determination in step S43 of the flowchart shown in FIG. 10 is negative, the ECU 200 executes the operation shown in the flowchart in FIG. 12. Since the operation of the ECU 200 according to the flowchart in FIG. 10 has already been described, detailed description will be omitted.

First, the ECU 200 determines whether operation on the touch panel 180 has been detected by the touch sensor 183 (step S61). If no operation on the touch panel 180 is detected (step S61/NO), the ECU 200 acquires the state information again (step S42) and determines whether the vehicle 1 is in the stop state (step S43).

If operation on touch panel 180 is detected (step S61/YES), the ECU 200 determines whether the operation amount of the detected operation is greater than the determination threshold (step S62).

If the operation amount of the detected operation is equal to or less than the determination threshold (step S62/NO), the ECU 200 acquires the state information again (step S42) and determines whether the vehicle 1 is in the stop state (step S43).

If the operation amount of the detected operation is greater than the determination threshold (step S62/YES), the ECU 200 determines whether the time elapsed from the detection of the operation is equal to or greater than the set time (step S63). If the set time has not elapsed from the detection of the operation (step S63/NO), the ECU 200 waits until the time elapsed from the detection of the operation reaches the set time.

If the time elapsed from the detection of the operation is equal to or greater than the set time (step S63/YES), the ECU 200 changes the setting of the operation target (step S64). For example, the ECU 200 changes the elasticity of the suspension 170, which is the operation target, by one stage.

### [6. Configuration of Embodiment 5]

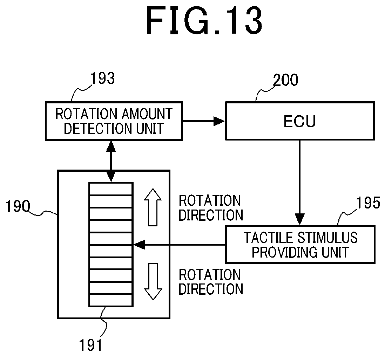

FIG. 13 is a diagram showing a configuration of an operation unit of Embodiment 5.

In the above Embodiments 1 to 4, the case has been described in which the operation unit is the touch panel 180. In Embodiment 5, a configuration is described in which a scroll wheel 191 is used instead of the touch panel 180 as the operation unit 190, which allows the operations similar to those described in Embodiments 1 to 4.

The operation unit 190 includes a scroll wheel 191 that is a rotary operation instrument rotated by the occupant, and a rotation amount detection unit 193 that detects the rotation direction and rotation amount of the scroll wheel 191. The operation unit 190 also includes a tactile stimulus providing unit 195 that provides a tactile stimulus, such as a vibration, to the occupant's finger operating the scroll wheel 191.

The rotation amount detection unit 193 outputs information indicating the detected rotation direction and rotation amount of the scroll wheel 191 to the ECU 200.

The tactile stimulus providing unit 195 provides vibration to the occupant's finger operating the scroll wheel 191 in response to instructions from the ECU 200.

When the vehicle is in the stop state, the ECU 200 causes the tactile stimulus providing unit 195 to provide a tactile stimulus each time the rotation amount detected by the rotation amount detection unit 193 reaches a first operation amount that is set in advance.

Furthermore, in a case where the vehicle 1 is in a driving state, the ECU 200 causes the tactile stimulus providing unit 195 to provide a tactile stimulus each time the rotation amount detected by the rotation amount detection unit 193 reaches a second operation amount that is set in advance and is different from the first operation amount.

The first operation amount is, for example, an operation amount that is equal to or greater than a determination threshold corresponding to the stop state, and the second operation amount is, for example, an operation amount that is equal to or greater than a determination threshold corresponding to a driving state.

As a result, regardless of whether the vehicle 1 is in the stop state or the driving state, the occupant can be notified of the operation amount that is determined to be one operation, and the occupant can reliably perform the operation.

The above-described embodiments are preferred embodiments. However, the present invention is not limited to the above-described embodiments, and various modifications are possible without departing from the spirit of the present invention.

For example, the functional units of the vehicle 1 shown in FIGS. 1 to 3 indicate functional configurations, and specific implementation forms are not particularly limited. In other words, it is not necessarily necessary to implement hardware corresponding to each functional unit individually, and it is of course possible to configure so that one or more processors execute programs to implement the functions of a plurality of functional units. Furthermore, some of the functions implemented by software in the above embodiments may be implemented by hardware, and some of the functions implemented by hardware may be implemented by software.

Furthermore, the processing units in the flowcharts shown in FIGS. 6, 7, and 9 to 12 are divisions each corresponding to a main processing content, to make the processing of the ECU 200 easier to understand. The present invention is not limited by the manner of division into processing units or the names of the processing units shown in the flowcharts shown in FIGS. 6, 7, and 9 to 12. In addition, the processing of the ECU 200 can be divided into even more processing units depending on the processing content, or one processing unit can be divided so that it includes even more processing. Furthermore, the processing orders of the above flowcharts are not limited to the example shown in the figures.

### (Configuration Supported by Above-Described Embodiments)

The above-described embodiments are specific examples of the following configurations.

### (Configuration 1)

A vehicle including: an acquisition unit (251) that acquires state information indicating a state of a vehicle (1); an operation unit (180) that receives an operation; and a setting change unit (253) that changes a setting of an operation target based on an operation received by the operation unit (180), wherein, based on the state information acquired by the acquisition unit (251), the setting change unit (253) changes a relationship between an operation amount of an operation received by the operation unit (180) and a degree of change in changing a setting of the operation target.

This configuration changes the relationship between the operation amount of the operation received by the operation unit (180) and the degree of change in changing the setting of the operation target based on the state information indicating the state of the vehicle (1) acquired by the acquisition unit (251). As a result, the setting of the operation target can be changed to a setting intended by the occupant through an operation performed by the occupant in accordance with the vehicle state.

### (Configuration 2)

The vehicle according to Configuration 1, wherein the setting change unit (253) determines an operation received by the operation unit (180) based on an operation amount of an operation received by the operation unit (180) and a determination threshold corresponding to state information acquired by the acquisition unit (251), and changes a setting of the operation target to a degree of change corresponding to a determined operation.

This configuration determines the operation received by the operation unit (180) using a determination threshold corresponding to the state information acquired by the acquisition unit (251). For example, in a case where the vehicle (1) is in the driving state, it may be more difficult to perform a delicate operation on the operation unit than in a case where the vehicle (1) is in the stopped state. For this reason, the operation is determined using a determination threshold value corresponding to the state of the vehicle (1), and the accuracy of the determination of the operation can be improved, allowing the operation intended by the user to be accurately received.

### (Configuration 3)

The vehicle according to Configuration 2, wherein a state of the vehicle (1) indicated by the state information includes a stop state in which the vehicle (1) is stopped and a driving state in which the vehicle (1) is driving, and the determination threshold corresponding to the driving state is greater in value than the determination threshold corresponding to the stop state.

With this configuration, in a case where the vehicle (1) is in the driving state, an operation is determined using a determination threshold that is greater in value than in a case where the vehicle (1) is in the stop state. As a result, even when the vehicle (1) is driving and it is more difficult for the occupant to perform a fine operation than when the vehicle (1) is in the stopped state, the accuracy of determination of the operation can be improved, allowing the operation intended by the user to be accurately received.

### (Configuration 4)

The vehicle according to Configuration 2, wherein a state of the vehicle (1) indicated by the state information includes a normal driving mode in which the vehicle (1) is driven in accordance with an accelerator operation and a brake operation of an occupant of the vehicle (1), and at least one of a constant speed driving mode in which the vehicle (1) drives at a predetermined speed and a congestion following mode in which the vehicle (1) is driven following a preceding vehicle ahead of the vehicle (1) on a congested road, and the determination threshold corresponding to the congestion following mode or the constant speed driving mode is less in value than the determination threshold corresponding to the normal driving mode.

With this configuration, the determination threshold corresponding to the congestion following mode or the constant speed driving mode is less in value than the determination threshold corresponding to the normal driving mode. Therefore, the operation performed by the occupant can be determined using the determination threshold corresponding to the driving mode of the vehicle (1), allowing the operation intended by the user to be accurately received.

### (Configuration 5)

The vehicle according to any one of Configurations 2 to 4, further including a display unit (33) that displays a setting related to a function provided in the vehicle (1), the function being the operation target, wherein the setting change unit (253) changes a setting related to the function when an operation amount of an operation received by the operation unit (180) is greater than the determination threshold corresponding to a state of the vehicle (1) indicated by the state information.

This configuration makes it possible to determine the operation received by the operation unit (180) using the determination threshold corresponding to the state information, and to change the settings related to the functions provided to the vehicle (1).

### (Configuration 6)

The vehicle according to Configuration 2, wherein a state of the vehicle (1) indicated by the state information includes a stop state in which the vehicle (1) is stopped and a driving state in which the vehicle (1) is driving, the operation unit (180) includes an operation surface (181) and detects an operation direction of a touch operation on the operation surface (181), the setting change unit (253) restricts operation directions to be compared with the determination threshold among the operation directions detected by the operation unit (180), and the number of the operation directions to be restricted in a case where the vehicle (1) is in the driving state is greater than the number of the operation directions to be restricted in a case where the vehicle (1) is in the stop state.

This configuration restricts the operation directions to be compared with the determination threshold among the operation directions of touch operations detected by the operation unit (180). Furthermore, the number of the operation directions to be restricted in a case where the vehicle (1) is in a driving state is greater than the number of the operation directions to be restricted in a case where the vehicle (1) is in the stop state. Therefore, by increasing the number of the operation directions to be restricted from being operation directions to be compared with the determination threshold in a case where the vehicle (1) is in a driving state, the accuracy of determination of the operation in a case where the vehicle (1) is in a driving state can be improved.

### (Configuration 7)

The vehicle according to any one of Configurations 2 to 6, wherein the operation unit (180) includes an operation instrument (191) to be operated by an occupant of the vehicle (1), a state of the vehicle (1) indicated by the state information includes a stop state in which the vehicle (1) is stopped and a driving state in which the vehicle (1) is driving, the vehicle (1) includes a tactile stimulus providing unit (195) that provides a tactile stimulus to a finger of the occupant, the finger being in contact with the operation instrument (191), and the setting change unit (253) causes the tactile stimulus providing unit (195) to provide the tactile stimulus each time the operation unit (180) receives an operation with a first operation amount, in a case where the vehicle (1) is in the stop state, and causes the tactile stimulus providing unit (195) to provide the tactile stimulus each time the operation unit (180) receives an operation with a second operation amount different from the first operation amount, in a case where the vehicle (1) is in the driving state.

With this configuration, in a case where the vehicle (1) is in the stop state, the operation unit (180) can provide a tactile stimulus to the occupant's finger each time it receives an operation of the first operation amount.

Furthermore, in a case where the vehicle (1) is in a driving state, the operation unit (180) can provided a tactile stimulus to the occupant's finger each time it receives an operation of the second operation amount. Thus, a tactile stimulus serving as a guide for operation can be provided to the occupant in a case where the vehicle (1) is in the stop state and in a case where the vehicle (1) is in the driving state.

### (Configuration 8)

The vehicle according to Configuration 7, wherein the first operation amount is an operation amount received by the operation unit (180), the operation amount being an operation amount equal to or greater than the determination threshold corresponding to the stop state, the second operation amount is an operation amount received by the operation unit (180), the operation amount being an operation amount equal to or greater than the determination threshold corresponding to the driving state, and the first operation amount is less than the second operation amount.

This configuration provides a tactile stimulus to the occupant's finger each time the operation unit (180) receives an operation amount corresponding to one operation, thereby making it easier for the occupant to perform an operation in accordance with the state of the vehicle.

### (Configuration 8)

The vehicle according to any one of Configurations 1 to 8, wherein the operation unit (180) includes a touch panel that is provided on a handle of the vehicle (1) as one of handle switches, the touch panel detecting a touch operation.

This configuration allows an operation to be input by touching the touch panel (180), increasing simplicity of operation by decreasing the number of parts of the handle switch.

### (Configuration 9)

The vehicle according to any one of Configurations 1 to 8, wherein the operation unit (180) is a scroll wheel (191) that is provided on a handle of the vehicle (1) as one of handle switches.

This configuration enables an input by operating the scroll wheel (191), increasing simplicity of operation by decreasing the number of parts of the handle switch.

### Reference Signs List

1 vehicle
30 display device
33 monitor
36 handle-side operation unit
110 vehicle speed sensor
120 brake sensor
130 shift position sensor
140 IG switch
150 throttle valve
160 hydraulic cylinder
170 suspension
180 touch panel
181 operation surface
183 touch sensor
200 ECU
210 input and output I/F
230 memory unit
250 processor
251 acquisition unit
253 setting change unit

## Claims

1. A vehicle comprising:
an acquisition unit (251) that acquires state information indicating a state of a vehicle (1);
an operation unit (180) that receives an operation; and
a setting change unit (253) that changes a setting of an operation target based on an operation received by the operation unit (180),
wherein, based on the state information acquired by the acquisition unit (251), the setting change unit (253) changes a relationship between an operation amount of an operation received by the operation unit (180) and a degree of change in changing a setting of the operation target.

2. The vehicle according to claim 1, wherein the setting change unit (253)
determines an operation received by the operation unit (180) based on an operation amount of an operation received by the operation unit (180) and a determination threshold corresponding to state information acquired by the acquisition unit (251), and
changes a setting of the operation target to a degree of change corresponding to a determined operation.

3. The vehicle according to claim 2, wherein
a state of the vehicle (1) indicated by the state information includes a stop state in which the vehicle (1) is stopped and a driving state in which the vehicle (1) is driving, and
the determination threshold corresponding to the driving state is greater in value than the determination threshold corresponding to the stop state.

4. The vehicle according to claim 2, wherein
a state of the vehicle (1) indicated by the state information includes a normal driving mode in which the vehicle (1) is driven in accordance with an accelerator operation and a brake operation of an occupant of the vehicle (1), and at least one of a constant speed driving mode in which the vehicle (1) drives at a predetermined speed and a congestion following mode in which the vehicle (1) is driven following a preceding vehicle ahead of the vehicle (1) on a congested road, and
the determination threshold corresponding to the congestion following mode or the constant speed driving mode is less in value than the determination threshold corresponding to the normal driving mode.

5. The vehicle according to claim 2, further comprising a display unit (33) that displays a setting related to a function provided in the vehicle (1), the function being the operation target,
wherein the setting change unit (253) changes a setting related to the function when an operation amount of an operation received by the operation unit (180) is greater than the determination threshold corresponding to a state of the vehicle (1) indicated by the state information.

6. The vehicle according to claim 2, wherein
a state of the vehicle (1) indicated by the state information includes a stop state in which the vehicle (1) is stopped and a driving state in which the vehicle (1) is driving,
the operation unit (180) includes an operation surface (181) and detects an operation direction of a touch operation on the operation surface (181),
the setting change unit (253) restricts operation directions to be compared with the determination threshold among the operation directions detected by the operation unit (180), and
the number of the operation directions in a case where the vehicle (1) is in the driving state is limited to less than the number of the operation directions in a case where the vehicle (1) is in the stop state.

7. The vehicle according to claim 2, wherein
the operation unit (180) includes an operation instrument (191) to be operated by an occupant of the vehicle (1),
a state of the vehicle (1) indicated by the state information includes a stop state in which the vehicle (1) is stopped and a driving state in which the vehicle (1) is driving,
the vehicle (1) includes a tactile stimulus providing unit (195) that provides a tactile stimulus to a finger of the occupant, the finger being in contact with the operation instrument, and
the setting change unit (253)
causes the tactile stimulus providing unit (195) to provide the tactile stimulus each time the operation unit (180) receives an operation with a first operation amount, in a case where the vehicle (1) is in the stop state, and
causes the tactile stimulus providing unit (195) to provide the tactile stimulus each time the operation unit (180) receives an operation with a second operation amount different from the first operation amount, in a case where the vehicle (1) is in the driving state.

8. The vehicle according to claim 7, wherein
the first operation amount is an operation amount received by the operation unit (180), the operation amount being an operation amount equal to or greater than the determination threshold corresponding to the stop state,
the second operation amount is an operation amount received by the operation unit (180), the operation amount being an operation amount equal to or greater than the determination threshold corresponding to the driving state, and
the first operation amount is less than the second operation amount.

9. The vehicle according to any one of claims 1 to 8, wherein the operation unit (180) includes a touch panel that is provided on a handle of the vehicle (1) as one of handle switches, the touch panel detecting a touch operation.

10. The vehicle according to any one of claims 1 to 8, wherein the operation unit (180) is a scroll wheel that is provided on a handle of the vehicle (1) as one of handle switches.
